(19) Europäisches Patentamt
European Patent Office
Office européen des brevets

(11) Publication number: **0 220 753 B1**

(12) # EUROPEAN PATENT SPECIFICATION

(45) Date of publication of the patent specification: **05.07.89**

(51) Int. Cl.⁴: **C10G 31/11,** B01D 13/00

(21) Application number: **86201362.0**

(22) Date of filing: **01.08.86**

(54) **Process for the separation of solvents from hydrocarbons dissolved in said solvents.**

(30) Priority: **30.08.85 GB 8521607**

(43) Date of publication of application: **06.05.87 Bulletin 87/19**

(45) Publication of the grant of the patent: **05.07.89 Bulletin 89/27**

(84) Designated Contracting States: **AT BE CH DE FR GB IT LI NL SE**

(56) References cited:
**FR-A- 2 250 819**
**US-A- 3 043 891**
**US-A- 3 919 075**

(73) Proprietor: **SHELL INTERNATIONALE RESEARCH MAATSCHAPPIJ B.V., Carel van Bylandtlaan 30, NL-2596 HR Den Haag(NL)**

(72) Inventor: **Bitter, Johan George Albert, Badhuisweg 3, NL-1031 CM Amsterdam(NL)**
Inventor: **Haan, Johannes Pieter, Badhuisweg 3, NL-1031 CM Amsterdam(NL)**
Inventor: **Rijkens, Hendrik Cornelis, Badhuisweg 3, NL-1031 CM Amsterdam(NL)**

(74) Representative: **Aalbers, Onno et al, P.O. Box 302, NL-2501 CH The Hague(NL)**

EP 0 220 753 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a process for the separation of solvents from hydrocarbons dissolved in said solvents, to supported membranes suitable for use in said process and to a process for producing said membranes.

It has been known for many years to separate various hydrocarbon compounds from feed solutions comprising said compounds and a solvent by contacting such a feed solution with one side of a membrane and recovering one or more hydrocarbon compounds and in some cases solvent from the other (permeate) side of the membrane.

It is also known to increase the rate of permeation of organic compounds through particular elastomeric membranes by applying a solvent in the feed solution which causes said membranes to swell to such an extent that (polymeric) organic compounds having relatively high molecular weights (e.g. above 1000) will permeate together with the solvent though relatively thick (in the order of millimetres) barrier membranes.

However, according to the above-mentioned known processes solvent is not separated as such; hydrocarbons remain present in the solvent either at the permeate side of the applied membrane or at the feed side when said membrane is impermeable for the solvent.

Surprisingly, it has now been found that a particular combination of solvents i.e. an aromatic solvent together with a polar aliphatic solvent can be separated with excellent selectivity from hydrocarbons (e.g. oil fractions) dissolved therein by applying a dense (substantially hole-free) membrane which is substantially impermeable to said hydrocarbons and which membrane comprises a layer of a halogen-substituted silicone compound as defined hereinafter.

Moreover, it has been found that the rate of permeation (i.e. the flux) of the solvents through the membrane can be surprisingly high in the process according to the invention.

Accordingly, the present invention provides a process for the separation of solvents from hydrocarbons dissolved in said solvents wherein a feed solution comprising hydrocarbons dissolved in an aromatic solvent and a polar aliphatic solvent is contacted at elevated pressure with one side of a dense membrane which is substantially impermeable to said hydrocarbons and which membrane comprises a layer of a halogen-substituted silicone compound comprising units according to the general formula:

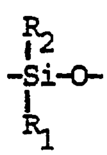

wherein $R_1$ and $R_2$ represent moieties chosen from the group consisting of hydrogen, halogen, alkyl, aryl, aralkyl and halogen-substituted alkyl, aryl and aralkyl moieties, and said solvents are recovered from the other side of the membrane.

It appears that contact with a polar aliphatic solvent as such can cause a halogen-substituted silicone-comprising membrane to swell excessively (e.g. by hundreds of vol.%, compared with solvent-free membrane material), leading to an unacceptably low selectivity (a) defined as :

$\alpha = (Y/X)\ \text{solvent} \times (X/Y)\ \text{oil}$

wherein X = concentration in the feed solution and Y = concentration in the permeate (recovered at the "other side" of the membrane). However, in the presence of a feed solution comprising, in addition to hydrocarbons and a polar aliphatic solvent, an aromatic solvent the membrane layer as defined hereinbefore will swell to such an extent that both an excellent selectivity as well as a high solvent flux through the membrane can be attained.

In order to show the above-mentioned desirable characteristics in the solvent separation process according to the present invention it is required that the membrane comprises halogen moieties i.e. in the formula which represents the units present in the silicone compound at least one of $R_1$ and $R_2$ comprises halogen as such or in the form of a halogen- substituted alkyl, aryl or aralkyl moiety; a halogen-substituted alkyl moiety is preferred in this context, in particular a 3,3,3-trihalogen propyl moiety (represented by $R_1$ in said formula). Most preferably the membrane applied in the process according to the present invention comprises fluorine-substituted moieties such as 3,3,3-trifluoropropyl. $R_2$ preferably represents a methyl moiety.

The membrane suitably comprises the halogen-substituted silicone compound as described hereinbefore in the form of a cross-linked homopolymer; however, a copolymer of said silicone compound and an elastomeric prepolymer ( e.g. an organopolysiloxane compound) may be used instead. The membrane layer which comprises said halogen-substituted silicone compound suitably has a thickness from 0.1-100 μm, and preferably from 1-10 μm, in order to attain relatively high permeate fluxes when said membranes are applied in solvent separation processes according to the present invention.

The use of reinforcing filler in the membrane layer comprising the silicone compound is preferably avoided because of the negative influence on the permeability of the membrane layer. A membrane with adequate strength for the present purpose can be obtained by supporting the silicone layer by means of a porous support which may comprise a layer of any suitable material, such as cloth, wire net or glass fibres; a porous poly-propylene supporting layer is preferred in view of the adhesive bond which can be attained between the non-selective polypropylene layer and the dense, selective silicone-comprising layer. Said polypropylene supporting layer suitably has a thickness from 10-500 μm, preferably from 15-100 μm. In some cases it may be advantageous to apply at least one extra layer between a dense, selective silicone-comprising layer and a porous support; This intermediate layer is suitably a dense, highly permeable layer with a good bonding capacity for both the silicone-comprising

layer and the support.

Dense membrane layers comprising a halogen-substituted silicone compound suitable for use in the solvent separation process according to the invention may be prepared by any method known in the art. A suitable method is solvent casting which involves forming a solution of a polymer or a prepolymer of the desired membrane compound is a solvent (to which a surface active agent is usually added) and casting the solution onto a liquid support to produce a thin layer which is subsequently dried (by evaporation of the solvent present in the (pre)polymer solution). The applied solvent is generally substantially immiscible in the liquid support in order to avoid a reduction of the surface tension of the liquid support which could lead to instability of the developing membrane and possible generation of holes therein.

However, the above-mentioned dense membranes are preferably prepared by means of a particular form of solvent casting wherein a solvent is applied which is more or less soluble in a polar liquid support (e.g. water), thus shortening the membrane solidification time substantially because not all solvent has to be removed from the membrane-forming layer by means of evaporation. Furthermore, there appears to be no need for a surface active agent (such as a dispersant) in case a solution is used which comprises a prepolymer of a halogen-substituted silicone compound and a ketone. It is possible to use a liquid support in which a small amount of the solvent used is already present before the solution which comprises the solvent is spread out and allowed to desolvate. A previous requirement for continuous refreshing of (part of) the liquid support (resulting in an uneven surface of the support) is thereby eliminated.

Water is a preferred supporting liquid, when used in combination with a prepolymer which can be cross-linked in the presence of water. Most preferably a prepolymer solution of 3,3,3-trifluoro propyl methyl siloxane in 3-heptanone is allowed to spread out over a water surface and form a cross-linked, dense membrane.

The process according to the present invention is well suited for applications in which a feed solution comprising hydrocarbons dissolved in an aromatic solvent and a polar aliphatic solvent is available as such. This is the case when hydrocarbon oils have been subjected to a solvent dewaxing treatment during which a toluene/methyl ethyl ketone solvent mixture is added to a wax-containing oil, followed by removing wax (e.g. by means of filtration). The solvents are usually recovered from the dewaxed hydrocarbon oil in a conventional flashing process with high energy consumption. With the process according to the present invention it is possible to reduce said energy consumption considerably by recovering a major portion of the solvents via membranes and separating only the remaining portion of solvents by conventional means.

As the present process is essentially a reverse osmosis process in which the pressure applied at the side of the membrane which is in contact with the feed solution has to be higher than the pressure at the permeate side of the membrane, some energy is required to operate a feed pump when the feed solution is not available at the desired pressure. The pressure differential between both sides of the applied membrane is suitably from 2-100 bar, and preferably from 10-80 bar.

The temperature at which the present process is carried out may vary within a wide range and is not critical as long as the applied membranes can withstand the operating conditions. A feed solution temperature from -25 °C to +100 °C is suitable in most cases whereas a temperature from -20 °C to +50 °C is preferred when solvents are to be recovered from dewaxed hydrocarbon oils.

The solvents : dissolved hydrocarbons weight ratio in the feed solution is suitably from 0.5-5, and preferably from 1-3. A solvents : hydrocarbons weight ratio of less than 0.5 usually has a negative influence on the performance of the applied membranes i.e. the solvent flux through the membrane becomes undesirably low.

Because of the above-mentioned influence of the solvents : hydrocarbons weight ratio in the feed solution on the solvents flux it is preferred to carry out the process according to the invention with a number of membrane units in a series-flow set-up, thus increasing the oil-content of the feed solution gradually in subsequent membrane units and maintaining a relatively high solvents ratio in the upstream membrane units. This way the total required membrane area can be reduced in comparison with a single-stage membrane separation process for a given quantity of feed solution to be treated. In order to avoid, or at least reduce fouling and concentration polarization of the membranes, the feed solution is preferably passed along one side of a membrane with a sufficiently high velocity and subsequently passed along one side of at least one following membrane.

In order to prevent concentration polarization even better, part of the feed solution which has been passed along one side of a membrane is preferably recirculated by reintroducing said part into the feed solution to be passed along said side of the same membrane.

Various types of membrane units may be applied in the process according to the present invention, such as a flat sheet or a tubular membrane unit. However, such configurations require a relatively large amount of space because their packing density (m membrane/m apparatus) is low. Preference is given to the application of spirally wound - or hollow fibre - membranes which have a good pressure resistance and a high packing density.

The invention is further illustrated by the following Examples.

Example 1

The process according to the present invention is carried out in a preferred embodiment schematically depicted in the Figure. A feed solution (stream 1) comprising 300 tons/day of dewaxed bright stock (hydrocarbon oil obtained by dewaxing a vacuum distillate) and 1720 tons/day of solvents (containing

equal amounts by weight of methyl ethyl ketone and toluene) is pumped (via pump (2) and line (3)) at a pressure of 40 bar and a temperature of 30 °C to the first membrane unit (4) where the feed stream is separated into permeate stream (5) (substantially containing solvents) and a stream (6) which is split into streams (7) and (8). Stream (7) is recycled via pump (18) to feed stream (3). Stream (8) is combined with recycle stream (9) from the second membrane unit (10) into stream (11) and passed via pump (12) to said second membrane unit from which permeate stream (13) is withdrawn. The separation process is continued in a third membrane unit (14) operating in a similar manner as the two previously described units. From said unit (14) a permeate stream (15) is withdrawn and combined with permeate streams (5) and (13) to stream (16) which amounts to 1270 tons/day of a mixture of methyl ethyl ketone and toluene comprising less than 1% by weight of hydrocarbon oil. The solvent mixture of stream (16) can be suitably recycled to a solvent dewaxing unit. Stream (17) amounts to 300 tons/day of hydrocarbon oil and 450 tons/day of solvents i.e. almost three quarts of the amount of solvents originally present in the feed solution is removed in three membrane units which comprise in total 1400 m membrane. The applied membrane consists of two layers i.e. a porous polypropylene supporting layer with a thickness of 25 μm and a dense top layer of 3,3,3-trifluoropropyl methyl siloxane, with a thickness of 5 μm.

Example 2

Preparation of dense membranes.

A dense membrane which can be advantageously applied in the process according to the invention is prepared by allowing a solution comprising a prepolymer of 3,3,3-trifluoropropyl methyl siloxane and 3-heptanone to spread out over a water surface in the absence of a spreading agent. After spreading and desolvation the dense fluorosilicone membrane ca be transferred onto a porous polypropylene supporting layer to provide a membrane with sufficient strength to withstand the pressures prevailing in reverse osmosis units.

## Claims

1. A process for the separation of solvents from hydrocarbons dissolved in said solvents wherein a feed solution comprising hydrocarbons dissolved in an aromatic solvent and a polar aliphatic solvent is contacted at elevated pressure with one side of a dense membrane which is substantially impermeable to said hydrocarbons and which membrane comprises a layer of a halogen-substituted silicone compound comprising units according to the general formula:

$$-\overset{R_2}{\underset{R_1}{Si}}-O-$$

wherein $R_1$ and $R_2$ represent moieties chosen from the group consisting of hydrogen, halogen, alkyl, aryl, aralkyl and halogen-substituted alkyl, aryl, and aralkyl moieties, and said solvents are recovered from the other side of the membrane.

2. A process according to claim 1 wherein the membrane comprises halogen-substituted alkyl moieties.

3. A process according to claim 2 wherein the membrane comprises 3,3,3-trihalogen propyl moieties represented by $R_1$.

4. A process according to any of the preceding claims wherein the membrane comprises fluorine-substituted moieties.

5. A process according to any of the preceding claims wherein the membrane comprises methyl moieties represented by $R_2$.

6. A process according to any of the preceding claims wherein the membrane comprises a copolymer of a halogen-substituted silicone compound and an elastomeric prepolymer.

7. A process according to any of the preceding claims wherein the membrane layer of a halogen-substituted silicone compound has a thickness from 0.1-100 μm, preferably from 1-10 μm.

8. A process according to any of the preceding claims wherein the membrane layer of a halogen-substituted silicone compound is substantially free of filler and is supported by a porous supporting layer.

9. A process according to any of the preceding claims wherein the feed solution has been obtained by subjecting a hydrocarbon oil to a dewaxing treatment with the aromatic solvent and the polar aliphatic solvent.

10. A process according to any of the preceding claims wherein the solvents : dissolved hydrocarbons weight ratio in the feed solution is from 0.5-5, preferably from 1-3.

11. A process according to any of the preceding claims wherein the aromatic solvent : polar aliphatic solvent weight ratio in the feed solution in from 0.1-10, preferably from 0.5-3.

12. A process according to any of the preceding claims wherein the aromatic solvent is toluene.

13. A process according to any of the preceding claims wherein the polar aliphatic solvent is methyl ethyl ketone.

14. A process according to any of the preceding claims wherein the applied pressure differential between the one side contacted with the feed solution and the other side of the membrane is from 2-100 bar, preferably from 10-80 bar.

15. Process according to any of the preceding claims wherein the feed solution is passed along one side of a membrane and subsequently passed along one side of at least one following membrane.

16. Process according to any of the preceding claims wherein part of the feed solution passed along one side of the membrane is reintroduced into the feed solution to be passed along said side of the membrane.

17. A supported membrane suitable for use in a process according to any of the preceding claims which membrane comprises a dense, selective layer

of a halogen-substituted silicone compound and a porous polypropylene supporting layer.

18. A process for producing dense membranes suitable for use in a process according to any of claims 1-16 wherein a solution comprising a prepolymer of a halogen-substituted silicone compound and a ketone is allowed to spread out over the surface of a polar liquid and the spread out solution is allowed to desolvate.

## Patentansprüche

1. Verfahren zur Trennung von Lösungsmitteln von in diesen Lösungsmitteln gelösten Kohlenwasserstoffen, worin eine in einem aromatischen Lösungsmittel und einem polaren aliphatischen Lösungsmittel gelöste Kohlenwasserstoffe enthaltende Speiselösung bei erhöhtem Druck mit einer Seite einer dichten Membran in Berührung gebracht wird, die gegenüber den genannten Kohlenwasserstoffen im wesentlichen undurchlässig ist und welche Membran eine Schicht aus einer Halogen-substituierten Silikonverbindung enthält, die Einheiten gemäß der allgemeinen Formel:

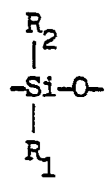

aufweist, worin $R_1$ und $R_2$ Reste bedeuten, die aus der aus Wasserstoff, Halogen, Alkyl-, Aralkyl- und Halogen-substituierten Alkyl-, Aryl- und Aralkylresten besteht, und worin die genannten Lösungsmittel von der anderen Seite der Membran gewonnen werden.

2. Verfahren nach Anspruch 1, worin die Membran Halogen-substituierte Alkylreste enthält.

3. Verfahren nach Anspruch 2, worin die Membran 3,3,3-Trihalogenpropylreste, dargestellt durch $R_1$, enthält.

4. Verfahren nach einem der vorstehenden Ansprüche, worin die Membran Fluor-substituierte Reste enthält.

5. Verfahren nach einem der vorstehenden Ansprüche, worin die Membran Methylreste, dargestellt durch $R_2$, enthält.

6. Verfahren nach einem der vorstehenden Ansprüche, worin die Membran ein Copolymer aus einer Halogen-substituierten Silikonverbindung und einem elastomeren Prepolymer enthält.

7. Verfahren nach einem der vorstehenden Ansprüche, worin die Membranschicht aus einer Halogen-substituierten Silikonverbindung eine Stärke von 0,1–100 µm, vorzugsweise von 1–10 µm aufweist.

8. Verfahren nach einem der vorstehenden Ansprüche, worin die Membranschicht aus einer Halogen-substituierten Silikonverbindung im wesentlichen frei von Füllstoff ist und von einer porösen Trägerschicht gestützt ist.

9. Verfahren nach einem der vorstehenden Ansprüche, worin die Speiselösung durch Ausführung einer Entparaffinierungsbehandlung an einem Kohlenwasserstofföl mit dem aromatischen Lösungsmittel und dem polaren aliphatischen Lösungsmittel erhalten worden ist.

10. Verfahren nach einem der vorstehenden Ansprüche, worin das Gewichtsverhältnis von Lösungsmittel : gelösten Kohlenwasserstoffen in der Einsatzlösung von 0,5–5, vorzugsweise von 1–3 beträgt.

11. Verfahren nach einem der vorstehenden Ansprüche, worin das Gewichtsverhältnis von aromatischem Lösungsmittel : polarem aliphatischem Lösungsmittel in der Speiselösung von 0,1–10, vorzugsweise von 0,5–3 beträgt.

12. Verfahren nach einem der vorstehenden Ansprüche, worin das aromatische Lösungsmittel Toluol ist.

13. Verfahren nach einem der vorstehenden Ansprüche, worin das polare aliphatische Lösungsmittel Methylethylketon ist.

14. Verfahren nach einem der vorstehenden Ansprüche, worin der zwischen der einen, mit der Speiselösung kontaktierten Seite und der anderen Seite der Membran angewendete Druckunterschied von 2–100 bar, vorzugsweise von 10–80 bar beträgt.

15. Verfahren nach einem der vorstehenden Ansprüche, worin die Speiselösung längs einer Seite einer Membran geführt wird und anschließend längs einer Seite wenigstens einer weiteren folgenden Membran geführt wird.

16. Verfahren nach einem der vorstehenden Ansprüche, worin ein Teil der längs einer Seite der Membran geführten Speiselösung wieder in die längs dieser Seite der Membran zu führenden Speiselösung eingeführt wird.

17. Zur Anwendung in einem Verfahren gemäß einem der vorstehenden Ansprüche geeignete Trägermembran, welche Membran eine dichte, selektive Schicht aus einer Halogen-substituierten Silikonverbindung und einer porösen Polypropylenträgerschicht umfaßt.

18. Verfahren zur Herstellung von dichten, zur Verwendung in einem Verfahren gemäß einem der Ansprüche 1 bis 16 geeigneten Membranen, worin eine Lösung, die ein Prepolymer einer Halogen-substituierten Silikonverbindung und ein Keton enthält, auf der Oberfläche einer polaren Flüssigkeit ausbreiten gelassen wird und die ausgebreitete Lösung desolvatisieren gelassen wird.

## Revendications

1. Un procédé pour la séparation de solvant d'hydrocarbures dissous dans ces solvants, selon lequel une solution de charge comprenant des hydrocarbures dissous dans un solvant aromatique et un solvant aliphatique polaire est mise en contact à pression élevée avec un côté d'une membrane dense qui est substantiellement imperméable auxdits hydrocarbures, cette membrane comprenant une couche d'une silicone halogénée comprenant des mailles de la formule générale:

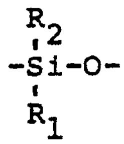

où $R_1$ et $R_2$ représentent des portions choisies dans le groupe formé par l'hydrogène, les halogènes et des portions alcoyle, aryle, aralcoyle et halogéno-alcoyle, -aryle et -aralcoyle et on recueille des solvants de l'autre côté de la membrane.

2. Un procédé selon la revendication 1, dans lequel la membrane comprend des portions halogéno-alcoyle.

3. Un procédé selon la revendication 2, dans lequel la membrane comprend des portions 3,3,3-trihalogénopropyle représentées par $R_1$.

4. Un procédé selon l'une quelconque des revendications précédentes, dans lequel le membrane comprend des portions fluorées.

5. Un procédé selon l'une quelconque des revendications précédentes, dans lequel la membrane comprend des portions méthyle représentées par $R_2$.

6. Un procédé selon l'une quelconque des revendications précédentes, dans lequel la membrane comprend un copolymère d'une silicone halogénée et d'un prépolymère élastomère.

7. Un procédé selon l'une quelconque des revendications précédentes, dans lequel la couche d'une silicone halogénée de la membrane a une épaisseur de 0,1–100 µm, de préférence de 1–10 µm.

8. Un procédé selon l'une quelconque des revendications précédentes, dans lequel la couche d'une silicone halogénée de la membrane est substantiellement exempte de charge et est supportée par une couche de support poreuse.

9. Un procédé selon l'une quelconque des revendications précédentes, dans lequel on a obtenu la solution de charge en soumettant une huile d'hydrocarbures à un traitement de déparaffinage par le solvant aromatique et le solvant aliphatique polaire.

10. Un procédé selon l'une quelconque des revendications précédentes, dans lequel le rapport en poids solvants : hydrocarbures dissous dans la solution de charge est compris entre 0,5 et 5, de préférence entre 1 et 3.

11. Un procédé selon l'une quelconque des revendications précédentes, dans lequel le rapport en poids solvant aromatique : solvant aliphatique polaire dans la solution de charge est compris entre 0,1 et 10, de préférence entre 0,5 et 3.

12. Un procédé selon l'une quelconque des revendications précédentes, dans lequel le solvant aromatique est du toluène.

13. Un procédé selon l'une quelconque des revendications précédentes, dans lequel le solvant aliphatique polaire est de la méthyléthylcétone.

14. Un procédé selon l'une quelconque des revendications précédentes, dans lequel la différence de pression utilisée entre le côté mis en contact avec la solution de charge et l'autre côté de la membrane est comprise entre 2 et 100 bars, de préférence entre 10 et 80 bars.

15. Un procédé selon l'une quelconque des revendications précédentes, dans lequel la solution de charge est passée le long d'un côté d'une membrane et est passée ensuite le long d'un côté d'au moins une membrane suivante.

16. Un procédé selon l'une quelconque des revendications précédentes, dans lequel une partie de la solution de charge passée le long d'un côté de la membrane est réintroduite dans la solution de charge à passer le long dudit côté de la membrane.

17. Une membrane supportée utilisable dans un procédé selon l'une quelconque des revendications précédentes, cette membrane comprenant une couche dense, sélective, d'une silicone halogénée et une couche de support de polypropylène poreux.

18. Un procédé de production de membranes denses utilisables dans un procédé selon l'une quelconque des revendications 1–16, dans lequel on laisse une solution comprenant un prépolymère d'une silicone halogénée et d'une silicone s'étaler sur la surface d'un liquide polaire et on laisse la solution étalée se désolvater.

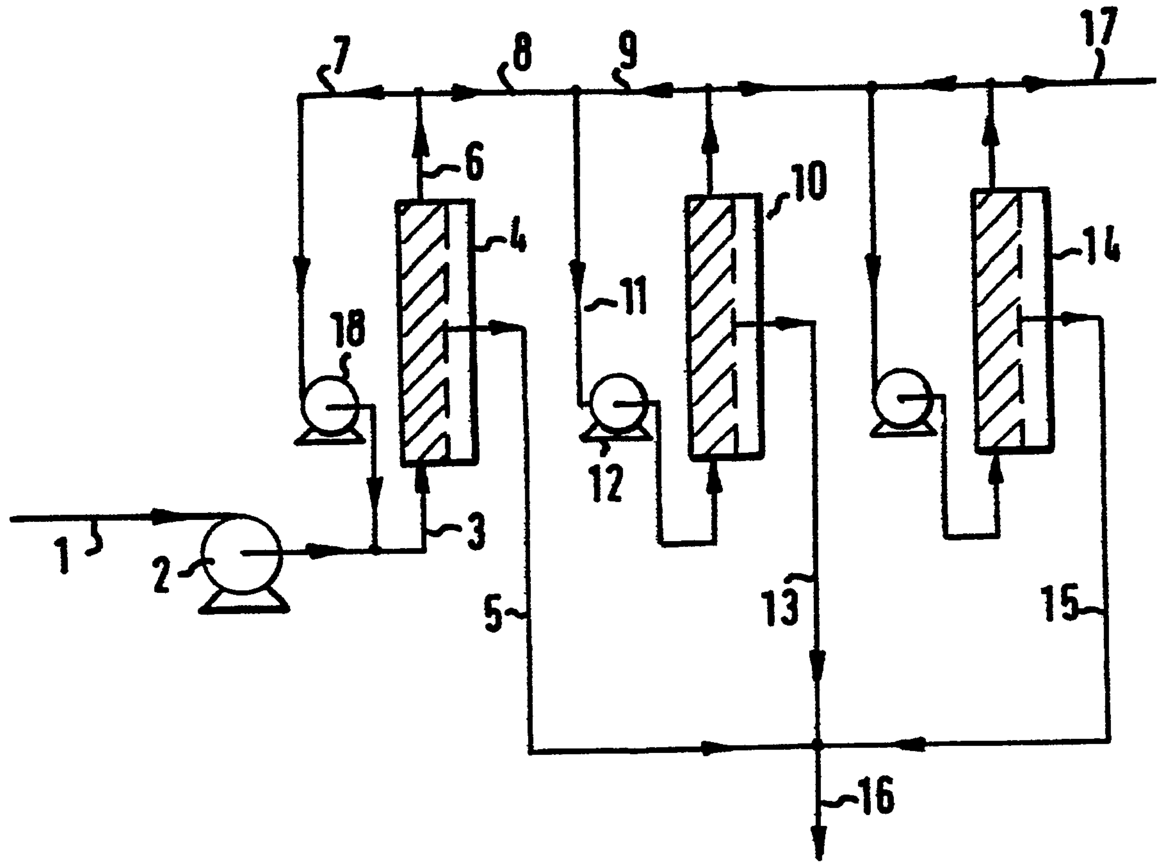
1
2
3
4
5
6
7
8
9
10
11
12
13
14
15
16
17
18